# EUROPÄISCHE PATENTSCHRIFT

(11) **EP 2 192 296 B1**
(45) Veröffentlichungstag und Bekanntmachung des Hinweises auf die Patenterteilung: **09.08.2017**
(21) Anmeldenummer: 09175980.3
(22) Anmeldetag: 13.11.2009
(51) Int. Cl.: F02M 26/32, F02B 29/04, F28D 7/10, F28F 9/02, F28D 21/00

(54) **Wärmetauscher, Abgasrückführsystem und Verwendung des Wärmetauschers**
Heat exchanger, exhaust gas recirculation system and use of the heat exchanger
Echangeur thermique, système de recirculation de gaz d'échappement et utilisation de l'échangeur thermique

(30) Priorität: 27.11.2008 DE 102008059407
(43) Veröffentlichungstag der Anmeldung: 02.06.2010
(73) Patentinhaber: MAHLE Behr GmbH & Co. KG, 70469 Stuttgart (DE)
(72) Erfinder: Barwig, Jürgen, 71665 Vaihingen/Enz (DE); Geskes, Peter, 73760 Ostfildern (DE); Ruckwied, Jens, 70176 Stuttgart (DE)
(74) Vertreter: Grauel, Andreas

(56) Entgegenhaltungen:
- EP-A1- 1 798 510
- DE-A1- 3 320 012
- DE-A1-102007 044 980
- JP-A- 2004 069 209

## Beschreibung

Die Erfindung betrifft einen Wärmetauscher zur Kühlung eines Fluids für einen Verbrennungsmotor, nach dem Oberbegriff des Anspruchs 1. DE 10 2007 044980 A1 offenbart einen derartigen Wärmetauscher. Wärmetauscher der eingangs genannten Art sind beispielsweise bekannt aus WO 2007/125118 A1 oder GB 2280256 A. Solche Wärmetauscher haben sich unter anderem als besonders vorteilhaft zur Kühlung eines Gases, zum Beispiel in Form eines Abgas- und/oder einer Ladeluft und/oder dergleichen Gasmischungen, erwiesen, wie sie bei Verbrennungsmotoren auftreten. Vorteilhaft lassen sich solche Wärmetauscher zur Kühlung eines Fluids für einen Verbrennungsmotor, beispielsweise eines Kraftfahrzeugs und/oder Schienenfahrzeugs einsetzen. Problematisch ist es regelmäßig, eine bei gesteigerten Leistungsanforderungen an den Wärmetauscher ausreichende Kühlungsleistung zur Verfügung zu stellen.

Einen Wärmetauscher der eingangs genannten Art mit bereits guten Kühleigenschaften ist beispielsweise in der deutschen Anmeldung der Anmelderin unter dem Aktenzeichen DE 10 2007 044 980 A1 beschrieben. Es hat sich gezeigt, dass insbesondere bei Führung eines zu kühlenden Fluids längs der Achse der Rohrteile entlang des äußeren Rohrteils vergleichsweise hohe Temperaturen, insbesondere im Bereich des Eintritts des zu kühlenden Fluids auftreten. Wünschenswert ist es auch für hohe Beanspruchungen eines solchen Wärmetauschers vergleichsweise vorteilhafte Kühlleistungen zu ermöglichen.

An dieser Stelle setzt die Erfindung an, deren Aufgabe es ist, einen Wärmetauscher, bei welchem eine verbesserte Kühlung mit vergleichsweise einfachen Mitteln realisierbar ist.

Die Aufgabe wird hinsichtlich des Wärmetauschers durch die Erfindung mittels einem Wärmetauscher der eingangs genannten Art gelöst, bei dem erfindungsgemäß der zumindest eine erste Kanal im inneren Rohrteil mit einer Eintrittsöffnung eines Verteilers über eine Fluidverbindung fluidverbunden ist. Der Verteiler ist insbesondere in Form eines Verteilergehäuses gebildet. Der Verteiler kann vorteilhaft im oder am äußeren Rohrteil integriert sein und/oder das äußere Rohrteil umgeben.

Die Erfindung geht von der Überlegung aus, dass eine Verbesserung der Kühlsituation bei einem Wärmetauscher der eingangs genannten Art dadurch erreichbar ist, dass ein von außen über einen Verteiler zugeführtes Fluid zumindest dem ersten Kanal im inneren Rohrteil zugeführt wird. Der Verteiler kann vorteilhaft zur Kühlung im Eintrittsbereich des Fluids genutzt werden. Wie von der Erfindung erkannt, erweisen sich nämlich insbesondere die Eintritts- und Austrittsbereiche von Fluiden, sei es das zu kühlende Fluid oder das Kühlfluid, hinsichtlich der Kühlsituation als besonders kritisch. Gemäß dem Konzept der Erfindung ist ein Verteiler vorgesehen, über welchen eine Fluidverbindung realisiert wird, die eine Eintrittsöffnung des Verteilers mit einem ersten Kanal im inneren Rohrteil fluidverbindet. Die Fluidverbindung dient insbesondere zur Führung eines Kühlfluids.

Insgesamt bietet das Konzept der Erfindung die Möglichkeit, temperaturkritische Bereiche des Wärmetauschers durch gezielte Führung des Fluids über die Fluidverbindung im Verteiler zu kühlen. Es hat sich gezeigt, dass ein solcher Verteiler mit besonders geringem Aufwand zu realisieren ist. Damit lässt sich eine Wärmetauscherleistung bei gegebenem Bauraum auf vergleichsweise einfache Art und Weise realisieren.

Die Aufgabe hinsichtlich des Abgasrückführsystems wird mit einem Abgasrückführsystem für einen Verbrennungsmotor mit einer Verbrennungsluftzuführleitung zur Zuführung von Verbrennungsluft zu einem Einlass des Verbrennungsmotors, einer Abgasleitung zur Abfuhr von Abgas von einem Auslass des Verbrennungsmotors und einer Abgasrückführleitung zur Rückführung von Abgas aus der Abgasleitung in die Verbrennungsluftzuführleitung gelöst, bei dem erfindungsgemäß in der Verbrennungsluftzuführleitung, in der Abgasleitung und/oder in der Abgasrückführleitung ein Wärmetauscher gemäß dem Konzept der Erfindung zur Kühlung der Verbrennungsluft und/oder des Abgases angeordnet ist.

Es hat sich gezeigt, dass der oder die Wärmetauscher vorteilhaft auch als Hochtemperatur- und/oder Niedertemperaturwärmetauscher eingesetzt werden können.

Dem Konzept der Erfindung folgend kann ein Wärmetauscher gemäß der Erfindung auch vorteilhaft als Ölkühler, insbesondere zur Kühlung von Motoröl und/oder Getriebeöl eingesetzt werden. Eine weitere Verwendung ist als Kälte- oder Kühlmittelkühler und/oder Kälte- oder Kühlmittelkondensator, insbesondere in einem Kälte- oder Kühlmittelkreislauf einer Klimaanlage eines Kraftfahrzeugs, möglich.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

In einer besonders bevorzugten Weiterbildung weist die Fluidverbindung eine gegenüber der Eintrittsöffnung liegende Mündung am inneren Rohrteil und/oder am Steg auf. Der wenigstens eine Steg kann eine Eingangsmündung am äußeren Rohrteil und/oder eine Ausgangsmündung am inneren Rohrteil haben. Dadurch kann das in der Fluidverbindung geführte Fluid das in dem zweiten Kanal geführte Fluid über einen vergleichsweise großen Bereich kühlen. Die Mündung ist vorteilhaft an dem wenigstens einen Steg angeordnet. Zum einen hat dies konstruktive Vorteile. Zum anderen hat es sich als besonders vorteilhaft erwiesen, dass die Fluidverbindung durch den wenigstens einen Steg verläuft. Der Steg kann gemäß dieser Weiterbildung in besonders vorteilhafter Weise zur Führung eines Fluids und Überbrückung des Abstands zwischen dem Mantel des äußeren Rohrteils und dem Mantel des inneren Rohrteils genutzt werden.

Insbesondere bis zum Eintritt in den Steg hat es sich als vorteilhaft erwiesen, dass die Fluidverbindung von einer Eintrittsöffnung bis zu einer Mündung in den Steg (Eingangsmündung), bzw. bis zu einer Mündung am inneren Rohrteil (Ausgangsmündung), in dem Verteiler verläuft. Vorteilhaft wurde gemäß der Weiterbildung erkannt, dass der wenigstens eine Steg als Teil eines Verteilers genutzt werden kann.

Die Fluidverbindung umgibt in besonders vorteilhafter Weise das äußere Rohrteil von einer Eintrittsöffnung bis zu einer Mündung umfänglich. Bei dieser Variante umgibt vorteilhaft ein Verteilergehäuse das äußere Rohrteil.

In einer abgewandelten Variante kann die Fluidverbindung im äußeren Rohrteil integriert sein. Bei einer Integration am äußeren Rohrteil wird besonders viel Bauraum nach außen gespart; in sofern umgibt bei dieser Variante die Fluidverbindung nur das innere Rohrteil. Es hat sich als besonders vorteilhaft erwiesen, dass die Fluidverbindung beidseitig der Eintrittsöffnung das äußere und/oder innere Rohrteil umgibt.

Vorteilhaft sind zwei Stege mit Fluidverbindung vorgesehen. In einer besonders vorteilhaften Abwandlung dieser Weiterbildung sind zwei sich entlang einer gemeinsamen diametralen Achse erstreckende Stege mit Fluidverbindung vorgesehen. Dies hat insbesondere Stabilitätsvorteile. Selbst bei am Wärmetauscher vorgenommenen Biegeprozessen oder sonstigen Umformungen während eines Herstellungsverfahrens oder im Betrieb erweist sich insbesondere der wenigstens eine Steg mit Fluidverbindung als stabil genug, um eine Einschnürung der Fluidverbindung zu vermeiden.

In besonders bevorzugter Weise weist wenigstens ein Steg längs zur Achse der Rohrteile einen wellenförmigen Verlauf auf. Dadurch lässt sich bei Beströmung des Wärmetauschers längs der Achse - im ersten und/oder zweiten Kanal - ein besonders guter Wärmeübergang erreichen da die Anströmfläche der Stege vergrößert ist. Der Wellenverlauf ist zweckmäßig derart ausgelegt, dass bei möglichst geringem Druckverlust dennoch ein verbesserter Wärmeübergang erreicht wird.

In besonders bevorzugter Weise ist ein Stutzen zur Zuführung des Fluids in Abstand von einem Ende des inneren Rohrteils angeordnet. Im Rahmen einer bevorzugten Weiterbildung ist das innere Rohrteil mit wenigstens einer Abschluss- oder Trennwand versehen, welche das innere Rohrteil längs der Achse der Rohrteile in Abstand von einer Mündung, aus dem Verteiler, verschließt. Der Abstand beträgt in besonders bevorzugter Weise zwischen 10% und 30% der Gesamtlänge des inneren Rohrteils.

Vorteilhaft ist, dass das innere Rohrteil und das äußere Rohrteil als separate Teile ausgeformt sind, wobei insbesondere ein Einschieben des inneren Rohrteils in das äußere Rohrteil durch einen Steg zwangsgeführt ist.

Vorteilhaft ist, dass das innere Rohrteil und das äußere Rohrteil materialeinheitlich einstückig ausgebildet sind, insbesondere mittels Strangpressen.

Vorteilhaft ist, dass in der Verbrennungsluftzuführleitung, in der Abgasleitung und/oder in der Abgasrückführleitung ein Wärmetauscher, insbesondere als Hochtemperatur- und/oder Niedertemperatur-Wärmetauscher, zur Kühlung der Verbrennungsluft und/oder des Abgases angeordnet ist, welcher nach einem der vorhergehenden Ansprüche ausgebildet ist.

Vorteilhaft ist die Verwendung des Wärmetauschers als Ölkühler, insbesondere zur Kühlung von Motoröl und/oder Getriebeöl.

Vorteilhaft ist die Verwendung des Wärmetauschers als Kälte- oder Kühlmittelkühler und/oder Kälte- oder Kühlmittelkondensator in einem Kälte- oder Kühlmittelkreislauf einer Klimaanlage eines Kraftfahrzeugs.

Ausführungsbeispiele der Erfindung werden nun nachfolgend anhand der Zeichnungen beschrieben. Diese sollen die Ausführungsbeispiele nicht notwendigerweise maßstäblich darstellen, vielmehr sind die Zeichnungen, wo zur Erläuterung dienlich, in schematisierter und/oder leicht verzerrter Form ausgeführt. Im Hinblick auf Ergänzungen der aus den Zeichnungen unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in den Zeichnungen sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, den Zeichnungen und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein.

Im Einzelnen zeigt die Zeichnung in:
- Fig. 1: eine perspektivische Teilquerschnittansicht eines Wärmetauschers gemäß einer bevorzugten Ausführungsform, bei welcher ein Steg eine Fluidverbindung aufweist;
- Fig. 2: eine Querschnittsansicht des Wärmetauschers der Fig. 1 in einem quer zur Rohrachse liegenden Querschnitt im Bereich des Verteilers;
- Fig. 3: eine zur Ausführungsform der Fig. 2 abgewandelte Ausführungsform, bei welcher zwei Stege eine Fluidverbindung aufweisen;
- Fig. 4: eine Querschnittsansicht eines abgewandelten Wärmetauschers der Fig. 1 mit vergleichsweise eng gesetzten Ein- und Austrittsstutzen für ein Kühlmittel, in Ansicht (B) entlang eines axialen Querschnitts A-A der Ansicht (A);
- Fig. 5: eine perspektivische Darstellung eines inneren und äußeren Rohrteils, welche den Blick auf das innere Rohrteil und gewellte Stege gemäß einer Abwandlung eines Wärmetauschers der zuvor erläuterten Ausführungsformen zeigt.

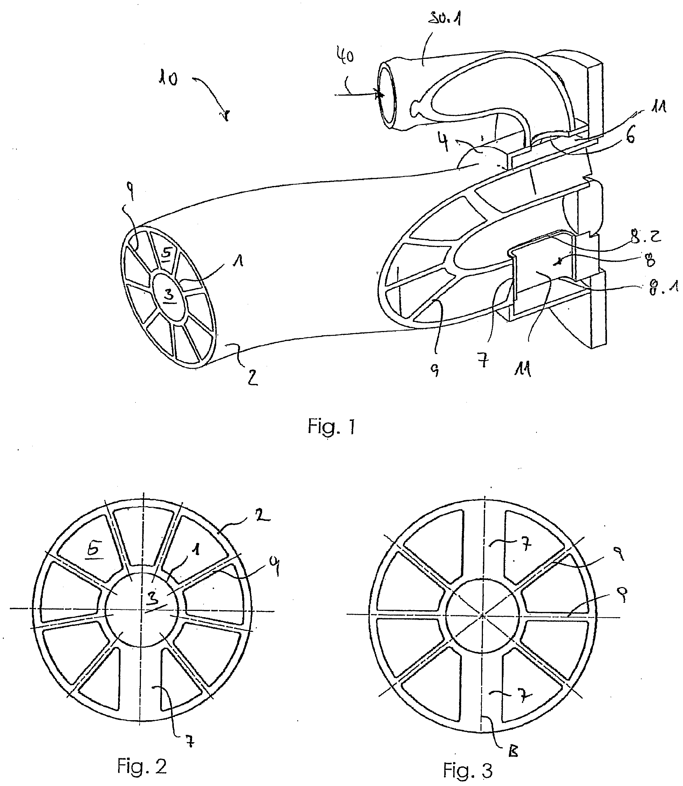

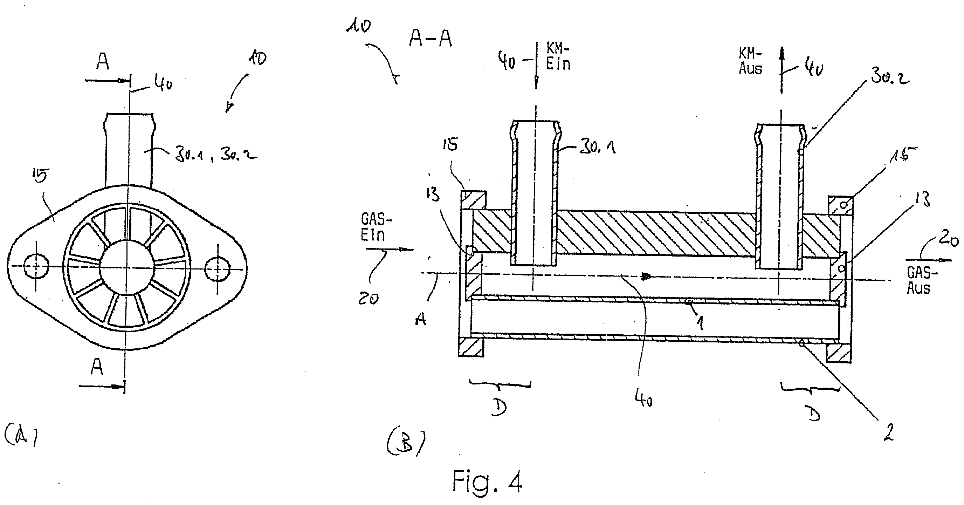

Fig. 1 zeigt einen Wärmetauscher 10 zur Kühlung eines Gases, vorliegend in Form eines Abgases und/oder einer Ladeluft einzeln oder im Gemisch. Das Gas 20 wird - wie aus Fig. 4 ersichtlich - dem Wärmetauscher 10 axial zugeführt und wird von einem über einen Eintrittsstutzen 30.1 und einen Austrittsstutzen 30.2 radial zugeführten Kühlfluid 40, welches den Wärmetauscher 10 ebenfalls axial durchströmt, gekühlt.

Der Wärmetauscher 10 weist - wie aus Fig. 1 ersichtlich - ein inneres Rohrteil 1 mit zumindest einem ersten Kanal 3 auf, welcher vorliegend als ein einziger zentraler Kanal 3 ausgebildet ist. Der erste Kanal dient im vorliegenden Fall zur Führung des Kühlfluids 40. Außerdem weist der Wärmetauscher 10 ein äußeres Rohrteil 2 auf, welches das innere Rohrteil 1 umfänglich vollständig umgibt. Vorliegend sind am inneren und äußeren Rohrteil 1, 2 Stege 9 und wenigstens ein Steg 7 - in Fig. 1 und Fig. 2 genau ein Steg 7 und gemäß einer Abwandlung von Fig. 3 genau zwei Stege 7 - angeordnet, die sich zur Bildung einer Anzahl von zwischen dem inneren und äußeren Rohrteil 1, 2 angeordneten zweiten Kanälen 5 zwischen den Rohrteilen 1, 2 erstrecken.

Gemäß dem Konzept der vorliegenden Erfindung ist der erste Kanal 3 im inneren Rohrteil 1 mit einer Eintrittsöffnung 6 eines Verteilers 4 über eine Fluidverbindung 11 fluidverbunden. Der Verteiler 4 ist vorliegend in Form eines Verteilergehäuses gebildet, welches direkt am äußeren Rohrteil 2 anliegend selbiges umfänglich umgibt. Vorliegend ist das äußere Rohrteil 2 und das innere Rohrteil 1 vollumfänglich vom Verteilergehäuse beidseitig der Eintrittsöffnung 6 umgeben. Konkret ist im Verteilergehäuse die Fluidverbindung 11 von einer Eintrittsöffnung 6 aus dem Stutzen - vorliegend ein Eintrittsstutzen 30.1 des Kühlmittels 40 - um das äußere Rohrteil 2 in direktem Kontakt mit dem Außenmantel des äußeren Rohrteils 2 herumgeführt zu einer gegenüber der Eintrittsöffnung 6 liegenden Mündung 8. Die Mündung 8 umfasst vorliegend zunächst eine Mündung 8.1 in den Steg 7 wie er in Fig. 2 für den Bereich des Verteilers im Querschnitt dargestellt ist, und dann die Mündung 8.2 in den ersten Kanal 3 am inneren Rohrteil 1. Zur Durchführung der Fluidverbindung 11 durch den Steg 7 ist dieser mit einem quer zur Achse der Rohrteile 1, 2 liegenden Querschnitt versehen, der - wie aus Fig. 2 deutlich ersichtlich - breiter als ein quer zur Achse der Rohrteile 1, 2 liegender Querschnitt eines weiteren Stegs 9 ist. Die Stege 9, vorliegend acht, teilen den Raum zwischen dem inneren Rohrteil und dem äußeren Rohrteil 1, 2 vorliegend in eine Anordnung von neun zweiten Kanälen 5, wobei die zum Steg 7 direkt benachbarten zweiten Kanäle 5 im Bereich des Verteilers 4 einen geringeren Querschnitt aufweisen als die anderen zweiten Kanäle 5.

Fig. 3 zeigt in Abwandlung zu der an Fig. 1 und Fig. 2 beschriebenen Ausführungsform, dass der mit einer Fluidverbindung 11 versehene Steg 7 auch in mehrfacher Ausführung ausgebildet werden kann. Gemäß Fig. 3 sind zwei mit einer Fluidverbindung 11 versehene Stege 7 entlang einer gemeinsamen diametralen Achse B gegenüberliegend angeordnet. Die in Fig. 2 und insbesondere den Fig. 3 dargestellte Ausführungsform hat den Vorteil, dass durch die Anordnung der Stege 7 selbige selbst bei Biegevorgängen stabil ausgelegt sind und so Einschnürungen oder Einfaltungen oder dergleichen, welche durch Biegevorgänge oder Verformungsvorgänge entstehen können, sicher vermieden sind. Dazu lässt sich die Breite eines Stegs 7 und die biegegerechte Positionierung der Stege 7 in Abstimmung mit der Positionierung des Verteilers 4 je nach Bedarf und Zweckmäßigkeit auslegen.

Ein Verteiler kann in der Art einer beschriebenen Fluidverbindung 11 ebenfalls im Bereich des hier nicht dargestellten Auslassstutzens 30.2 angeordnet sein.

Die zuvor beschriebenen Ausführungsformen haben gemäß dem Konzept der Erfindung den Vorteil, dass sich im Bereich des Verteilers 4 - d.h. insbesondere im Bereich eines Gaseintritts und/oder Gasaustritts - eine intensive bzw. bedarfsgerecht und zielgerechte Kühlung des gasführenden ersten Kanals 3 erreichen lässt. In einer gegenüber dem Stand der Technik überlegenen Weise erfolgt vorliegend zudem die Führung des Kühlfluids durch den, vorliegend gasdurchströmten Bereich, d.h. den der zweiten Kanäle 5, durch die anhand der in Fig. 1, Fig. 2 und Fig. 3 beschriebenen Öffnungen in den Stegen 7 hindurch. Damit werden zusätzliche Rohrteile oder Profile und dafür notwendige Fügeverfahren im Herstellungsprozess vermieden. Es versteht sich, dass eine Fluidverbindung 11 durch einen Steg 7 in der Art wie sie vorliegend erläutert ist nicht einschränkend ist. Vielmehr kann eine Fluidverbindung durch einen Steg 7 in vielfältiger und abgewandelter Art und Weise erfolgen, z.B. durch beliebig eingebrachte Löcher, Bohrungen, Durchbrüche oder dergleichen Öffnungen. Andere Arten von Öffnungen können Fräslöcher in runder oder Langform sein.

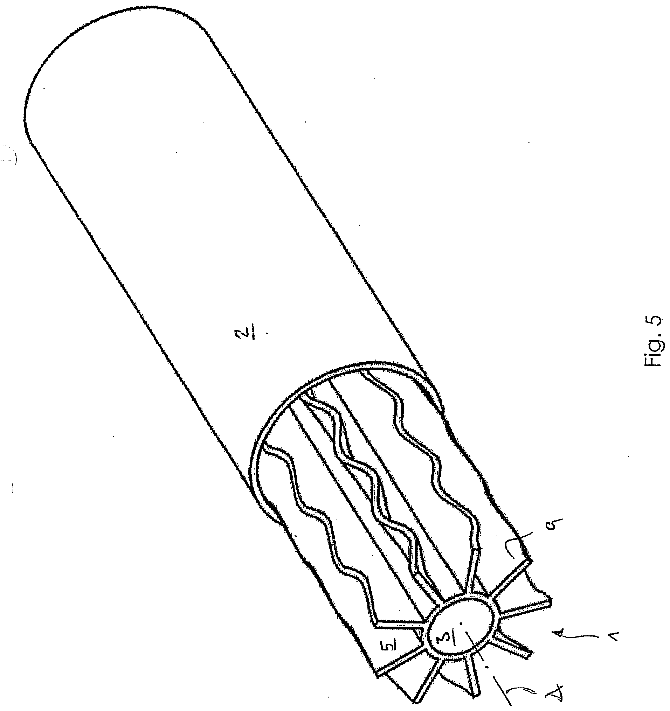

Insbesondere lässt sich - sowohl für die in Fig. 2 als auch für die in Fig. 3 gezeigte Ausführungsform - ,insbesondere ein Steg 9, wie in Fig. 5 dargestellt mit einem in Richtung der Achse A wellenförmigen Verlauf versehen, um den Wärmeübergang zwischen einem im ersten Kanal 3 geführten Kühlfluid und einem im zweiten Kanal 5 geführten Gas zu erhöhen. Durch den wellenförmigen Verlauf wird die Anströmfläche an einem Steg erhöht.

Fig. 4 zeigt in Ansicht (A) eine Kopfansicht des Wärmetauschers 10 und in Ansicht (B) einen Axialschnitt entlang der Linie A-A. Die Stutzen 30.1, 30.2 zum Eintritt bzw. Austritt eines Kuhlfluids 40 sind vorliegend in Abstand D zum Ende des inneren Rohrteils 1 angeordnet. Dies hat den Vorteil, dass eine Beabstandung zwischen dem Stutzen 30.1 für einen Eintritt des Kühlfluids 40 und dem Stutzen 30.2 für einen Austritt des Kuhlfluids 40 vergleichsweise gering ist. Dies wiederum führt dazu, dass ein Abstandsraum im Abstand D zwischen einem Eintritt bzw. Austritt des Kühlfluids einerseits und einem durch eine Abschlusswand 13 verschlossenen Ende des inneren Rohrteils andererseits für eine Mehrfachdurchströmung von frischem Fluid im Eintrittsbereich bzw. noch ausreichend temperiertem Fluid im Austrittsbereich genutzt werden kann. Mit anderen Worten wird eine Strömungsumkehr oder Mehrfachdurchströmung zwischen einem Eintrittsstutzen 30.1, Austrittsstutzen 30.2 und einer Abschlusswand 13 in vorteilhafter Weise genutzt, um einen Eintrittsbereich/ Austrittsbereich des Wärmetauschers besonders zu kühlen. Der Wärmetauscher 10 wird darüber hinaus über einen Flansch 15 an eine Gaszuleitung bzw. Gasableitung angeschlossen. Eine Gaszuleitung bzw. Gasableitung kann beispielsweise in Form eines Diffusors oder dergleichen gebildet sein.

Der vorliegend beschriebene Wärmetauscher weist bevorzugt einen Abstand D von 15% der Gesamtlänge des inneren Rohrteiles auf; dieser hat sich hinsichtlich der Kühlbedingungen bei der vorliegenden Ausführungsform als besonders bevorzugt erwiesen.

Die vorliegend erläuterten inneren und äußeren Rohrteile 1, 2 sind als Aluminiumstrangpressprofil gebildet. Die Ausführungsformen der Fig. 1 bis Fig. 4 zeigen Strangpressprofile, bei denen das innere und äußere Rohrteil 1, 2 mit den Stegen 7, 9 materialeinheitlich einstückig ausgebildet sind. Die Fig. 5 zeigt eine Ausführungsform, bei der das innere und äußere Rohrteil 1, 2 separat stranggepresst sind, um dann zusammengesetzt zu werden.

In hier nicht dargestellten Ausführungsformen ist es möglich auch das innere Rohrteil 1 mit einer Mehrzahl von rippenartigen Fortsätzen zu versehen, die in den ersten Kanal 3 hineinragen, um auch die Führung eines Fluids im ersten Kanal 3 vorteilhaft zu gestalten bzw. eine Anströmung auf solche rippenartige Fortsätze zu erhöhen und damit den Wärmetauscher.

Identische oder ähnliche Teile bzw. Teile mit identischer oder ähnlicher Wirkung sind vorliegend der Einfachheit halber mit gleichem Bezugszeichen versehen.

Zusammenfassend betrifft die Erfindung einen Wärmetauscher zur Kühlung eines Fluids für einen Verbrennungsmotor, insbesondere eines Kraftfahrzeugs und/oder Schienenfahrzeugs, insbesondere Gaskühler zur Kühlung eines Gases, insbesondere in Form eines Abgases und/oder einer Ladeluft und/oder dgl. Gasmischungen, aufweisend:
ein inneres Rohrteil 1 mit zumindest einem ersten Kanal 3 und ein äußeres Rohrteil 2, wobei
an zumindest einem von beiden, innerem Rohrteil 1 oder äußerem Rohrteil 2, wenigstens ein Steg 7 angeordnet ist, der sich zur Bildung mindestens eines zwischen dem inneren und äusseren Rohrteil 1, 2 angeordneten zweiten Kanals 5 bis zu dem jeweils anderen der beiden Rohrteile, inneres Rohrteil 1 oder äußeres Rohrteil 2, erstreckt. Erfindungsgemäß ist dabei vorgesehen, dass
der zumindest eine erste Kanal im inneren Rohrteil mit einer Eintrittsöffnung 6 eines Verteilers 4 über eine Fluidverbindung 11 fluidverbunden ist.

### Bezugszeichenliste

- 1: inneres Rohrteil
- 2: äußeres Rohrteil
- 3: erster Kanal
- 4: Verteiler
- 5: zweiter Kanal
- 6: Eintrittsöffnung
- 7: Steg
- 8: Mündung
- 8.1: Mündung
- 8.2: Mündung
- 9: Steg
- 10: Wärmetauscher
- 11: Fluidverbindung
- 13: Abschlusswand
- 15: Flansch
- 20: Gas
- 30.1: Eintrittsstutzen
- 30.2: Ausstrittsstutzen
- 40: Kühlfluid

- D: diametrale Achse
- A, B: Achse
- A-A: Ansicht

## Patentansprüche

1. Wärmetauscher zur Kühlung eines Fluids für einen Verbrennungsmotor, insbesondere eines Kraftfahrzeugs und/oder Schienenfahrzeugs, insbesondere Gaskühler zur Kühlung eines Gases, insbesondere in Form eines Abgases und/oder einer Ladeluft und/oder dgl. Gasmischungen, aufweisend:
ein inneres Rohrteil (1) mit zumindest einem ersten Kanal (3) und ein äußeres Rohrteil (2), wobei an zumindest einem von beiden, innerem Rohrteil (1) oder äußerem Rohrteil (2), wenigstens ein Steg (7) angeordnet ist, der sich, zur Bildung mindestens eines zwischen dem inneren und äusseren Rohrteil (1, 2) angeordneten zweiten Kanals (5), bis zu dem jeweils anderen der beiden Rohrteile, inneres Rohrteil (1) oder äußeres Rohrteil (2), erstreckt, wobei der zumindest eine erste Kanal im inneren Rohrteil mit einer Eintrittsöffnung (6) eines Verteilers (4) über eine Fluidverbindung (11) fluidverbunden ist, **dadurch gekennzeichnet, dass** der wenigstens eine Steg (7) mit Fluidverbindung einen quer zur Achse der Rohrteile liegenden Querschnitt aufweist, welcher breiter als ein quer zur Achse der Rohrteile liegender Querschnitt eines weiteren Stegs (9), insbesondere ohne Fluidverbindung, ist, und wobei die Fluidverbindung durch den wenigstens einen Steg (7) verläuft.

2. Wärmetauscher nach Anspruch 1, **dadurch gekennzeichnet, dass** die Fluidverbindung eine gegenüber der Eintrittsöffnung liegende Mündung (8) am inneren Rohrteil und/oder an einem Steg (7) aufweist.

3. Wärmetauscher nach Anspruch 1 oder 2, **dadurch gekennzeichnet, dass** die Fluidverbindung von einer Eintrittsöffnung bis zu einer Mündung in dem Verteiler, insbesondere in dem Verteilergehäuse, verläuft.

4. Wärmetauscher nach einem der Ansprüche 1 bis 3, **dadurch gekennzeichnet, dass** die Fluidverbindung das äußere Rohrteil von einer Eintrittsöffnung bis zu einer Mündung umfänglich umgibt und/oder im bzw. am äußeren Rohrteil integriert ist.

5. Wärmetauscher nach einem der Ansprüche 1 bis 4, **dadurch gekennzeichnet, dass** der Verteiler das äußere Rohrteil von einer Eintrittsöffnung bis zu einer Mündung beidseitig umfänglich umgibt und/oder im bzw. am äußeren Rohrteil integriert ist.

6. Wärmetauscher nach einem der Ansprüche 1 bis 5, **dadurch gekennzeichnet, dass** zwei Stege (7) mit Fluidverbindung, insbesondere zwei sich entlang einer gemeinsamen diametralen Achse (B) erstreckende Stege (7) mit Fluidverbindung vorgesehen sind.

7. Wärmetauscher nach einem der Ansprüche 1 bis 6, **dadurch gekennzeichnet, dass** wenigstens ein Steg (7, 9) längs zur Achse (A) der Rohrteile einen wellenförmigen Verlauf aufweist.

8. Wärmetauscher nach einem der Ansprüche 1 bis 7, **dadurch gekennzeichnet, dass** das innere Rohrteil (1) wenigstens eine Abschluss- oder Trennwand (13) aufweist, welche das innere Rohrteil (1) längs der Achse (A) der Rohrteile in Abstand von einer Mündung (8) verschließt, insbesondere der Abstand zwischen 10% und 30% der Gesamtlänge des inneren Rohrteiles (1) beträgt.

9. Wärmetauscher nach einem der Ansprüche 1 bis 8, **dadurch gekennzeichnet, dass** der zumindest eine Kanal (3) des inneren Rohrteils (1) zur Führung eines Kühlfluids vorgesehen ist, und/oder mindestens ein zwischen dem inneren und äußeren Rohrteil (1, 2) angeordneter weiterer Kanal (5) zur Führung des zu kühlenden Fluids vorgesehen ist.

10. Wärmetauscher nach einem der Ansprüche 1 bis 9, **dadurch gekennzeichnet, dass** das das innere Rohrteil (1) eine Mehrzahl von rippenartigen Fortsätzen aufweist, die in den Kanal (3) hineinragen.

11. Wärmetauscher nach einem der Ansprüche 1 bis 10, **dadurch gekennzeichnet, dass** zumindest eines von beiden, inneres Rohrteil (1) oder äußeres Rohrteil (2), über seinen Verlauf eine Verdrehung um eine Achse (A) in Längsrichtung aufweist.

12. Wärmetauscher nach einem der Ansprüche 1 bis 11, **dadurch gekennzeichnet, dass** das innere Rohrteil (1) und das äußere Rohrteil (2) über ihren Verlauf zumindest eine Biegung aufweisen.

13. Wärmetauscher nach einem der Ansprüche 1 bis 12, **dadurch gekennzeichnet, dass** zumindest eines der beiden, inneres Rohrteil (1) und/oder äußeres Rohrteil (2), als Strangpressprofil, insbesondere auf Basis von Aluminium, ausgebildet ist.

## Claims

1. A heat exchanger for cooling a fluid for an internal combustion engine, in particular of a motor vehicle and/or a rail vehicle, in particular a gas cooler for cooling a gas, in particular in the form of an exhaust gas and/or a charge air and/or similar gas mixtures, having:
an inner tube part (1) with at least one first channel (3) and an outer tube part (2), wherein at least one web (7) is arranged on at least one of the two, the inner tube part (1) or the outer tube part (2), the web extending to the respective other one of the two tube parts, the inner tube part (1) or the outer tube part (2), in order to form at least one second channel (5) which is arranged between the inner and the outer tube part (1, 2), wherein the at least one first channel in the inner tube part is fluidly connected to an entry opening (6) of a manifold (4) via a fluid connection (11), **characterised in that** the at least one web (7) with the fluid connection has a cross-section across the axis of the tube parts which is wider than a cross-section of a further web (9) across the axis of the tube parts, in particular without fluid connection, and wherein the fluid connection goes through the at least one web (7).

2. The heat exchanger according to claim 1, **characterised in that** the fluid connection has a mouth (8) on the inner tube part and/or on a web (7) which is opposite to the entry opening.

3. The heat exchanger according to claim 1 or 2, **characterised in that** the fluid connection goes from an entry opening to a mouth in the manifold, in particular in the manifold housing.

4. The heat exchanger according to one of claims 1 to 3, **characterised in that** the fluid connection entirely surrounds the outer tube part from an entry opening to a mouth and/or is integrated in or on the outer tube part.

5. The heat exchanger according to one of claims 1 to 4, **characterised in that** the manifold entirely surrounds both sides of the outer tube part from an entry opening to a mouth and/or is integrated in or on the outer tube part.

6. The heat exchanger according to one of claims 1 to 5, **characterised in that** two webs (7) with a fluid connection, in particular two webs (7) with a fluid connection extending along a common diametrical axis (B), are provided.

7. The heat exchanger according to one of claims 1 to 6, **characterised in that** at least one web (7, 9) has an undulating course along the axis (A) of the tube parts.

8. The heat exchanger according to one of claims 1 to 7, **characterised in that** the inner tube part (1) has at least one connecting or separating wall (13) which closes the inner tube part (1) along the axis (A) of the tube parts in a distance to a mouth (8), wherein the distance is in particular between 10% and 30% of the total length of the inner tube part (1).

9. The heat exchanger according to one of claims 1 to 8, **characterised in that** the at least one channel (3) of the inner tube part (1) is provided for carrying a cooling fluid and/or at least one further channel (5) which is arranged between the inner and the outer tube part (1, 2) is provided for carrying the fluid to be cooled.

10. The heat exchanger according to one of claims 1 to 9, **characterised in that** the inner tube part (1) has a plurality of rib-like extensions protruding into the channel (3).

11. The heat exchanger according to one of claims 1 to 10, **characterised in that** at least one of the two, the inner tube part (1) or the outer tube part (2), has a rotation about an axis (A) in the longitudinal direction along its course.

12. The heat exchanger according to one of claims 1 to 11, **characterised in that** the inner tube part (1) and the outer tube part (2) have at least one bending along their course.

13. The heat exchanger according to one of claims 1 to 12, **characterised in that** at least one of the two, the inner tube part (1) and/or the outer tube part (2), is formed as a extrusion press profile, in particular on the basis of aluminium.

## Revendications

1. Echangeur de chaleur pour le refroidissement d'un fluide pour un moteur à combustion interne, en particulier d'un véhicule automobile et / ou d'un véhicule sur rails, en particulier refroidisseur de gaz pour le refroidissement de gaz, se présentant en particulier sous la forme de gaz d'échappement et / ou d'un air de suralimentation et / ou de mélanges de gaz semblables, ledit échangeur de chaleur présentant :
une partie tubulaire intérieure (1) comprenant au moins un premier canal (3), et présentant une partie tubulaire extérieure (2) où au moins une barrette (7) est disposée sur au moins l'une des deux parties tubulaires, à savoir la partie tubulaire intérieure (1) ou la partie tubulaire extérieure (2), barrette qui, pour la formation au moins d'un deuxième canal (5) disposé entre la partie tubulaire (1, 2) intérieure et extérieure, s'étend respectivement jusqu'à l'autre des deux parties tubulaires, à savoir la partie tubulaire intérieure (1) ou la partie tubulaire extérieure (2), où le premier canal au moins au nombre de un est relié fluidiquement, dans la partie tubulaire intérieure, par une communication fluidique (11) avec une ouverture d'entrée (6) d'un distributeur (4), **caractérisé en ce que** la barrette (7) au moins au nombre de un, à communication fluidique, présente une section placée de façon transversale par rapport à l'axe des parties tubulaires, section qui est plus large qu'une section d'une autre barrette (9), en particulier sans communication fluidique, ladite section étant placée de façon transversale par rapport à l'axe des parties tubulaires, et où la communication fluidique s'étend à travers la barrette (7) au moins au nombre de un.

2. Echangeur de chaleur selon la revendication 1, **caractérisé en ce que** la communication fluidique présente, sur la partie tubulaire intérieure et / ou sur une barrette (7), une embouchure (8) placée à l'opposé de l'ouverture d'entrée.

3. Echangeur de chaleur selon la revendication 1 ou 2, **caractérisé en ce que** la communication fluidique s'étend depuis une ouverture d'entrée jusqu'à une embouchure placée dans le distributeur, en particulier dans le boîtier de distributeur.

4. Echangeur de chaleur selon l'une quelconque des revendications 1 à 3, **caractérisé en ce que** la communication fluidique entoure la partie tubulaire extérieure, de manière étendue, depuis une ouverture d'entrée jusqu'à une embouchure, et / ou est intégrée dans ou sur la partie tubulaire extérieure.

5. Echangeur de chaleur selon l'une quelconque des revendications 1 à 4, **caractérisé en ce que** le distributeur entoure la partie tubulaire extérieure, de manière étendue et des deux côtés, depuis une ouverture d'entrée jusqu'à une embouchure, et / ou est intégré dans ou sur la partie tubulaire extérieure.

6. Echangeur de chaleur selon l'une quelconque des revendications 1 à 5, **caractérisé en ce qu'**il est prévu deux barrettes (7) à communication fluidique, en particulier deux barrettes (7), à communication fluidique, s'étendant le long d'un axe (B) diamétral commun.

7. Echangeur de chaleur selon l'une quelconque des revendications 1 à 6, **caractérisé en ce qu'**au moins une barrette (7, 9) présente un profil de forme ondulée, longitudinalement par rapport à l'axe (A) des parties tubulaires.

8. Echangeur de chaleur selon l'une quelconque des revendications 1 à 7, **caractérisé en ce que** la partie tubulaire intérieure (1) présente au moins une paroi de fermeture ou de séparation (13) qui ferme la partie tubulaire intérieure (1) le long de l'axe (A) des parties tubulaires, à distance d'une embouchure (8), ladite distance étant comprise en particulier entre 10 % et 30 % de la longueur totale de la partie tubulaire intérieure (1).

9. Echangeur de chaleur selon l'une quelconque des revendications 1 à 8, **caractérisé en ce que** le canal (3), au moins au nombre de un, de la partie tubulaire intérieure (1) est prévu pour le guidage d'un fluide de refroidissement, et / ou au moins un autre canal (5) servant au guidage du fluide à refroidir est prévu entre la partie tubulaire intérieure et extérieure (1, 2).

10. Echangeur de chaleur selon l'une quelconque des revendications 1 à 9, **caractérisé en ce que** la partie tubulaire intérieure (1) présente une pluralité de prolongements en forme d'ailettes qui pénètrent dans le canal (3).

11. Echangeur de chaleur selon l'une quelconque des revendications 1 à 10, **caractérisé en ce qu'**au moins l'une des deux parties tubulaires, à savoir la partie tubulaire intérieure (1) ou la partie tubulaire extérieure (2), présente, sur son profil, une rotation autour d'un axe (A) dans la direction longitudinale.

12. Echangeur de chaleur selon l'une quelconque des revendications 1 à 11, **caractérisé en ce que** la partie tubulaire intérieure (1) et la partie tubulaire extérieure (2) présentent, sur leur profil, au moins une courbure.

13. Echangeur de chaleur selon l'une quelconque des revendications 1 à 12, **caractérisé en ce qu'**au moins l'une des deux parties tubulaires, à savoir la partie tubulaire intérieure (1) et / ou la partie tubulaire extérieure (2), est configurée comme un profilé extrudé, en particulier à base d'aluminium.
